# EUROPEAN PATENT APPLICATION

(11) **EP 4 087 150 A1**
(43) Date of publication of application: **09.11.2022**
(21) Application number: 22171228.4
(22) Date of filing: 03.05.2022
(51) Int. Cl.: H04B 7/0404, H04B 7/06, H04B 7/08

(54) **METHOD FOR BEAM SCANNING**

(30) Priority: 06.05.2021 FI 20215536
(71) Applicant: Nokia Technologies Oy, 02610 Espoo (FI)
(72) Inventor: CAPORAL DEL BARRIO, Samantha, 9000 Aalborg (DK); MARCONE, Alessio, 81541 Munich (DE); SVENDSEN, Simon, 9000 Aalborg (DK); VEJLGAARD, Benny, 9260 Gistrup (DK); ROM, Christian, 9000 Aalborg (DK)
(74) Representative: Nokia EPO representatives

(57) **Abstract**

An apparatus comprising: a plurality of antenna panels; means for receiving a synchronization signal burst comprising a plurality of synchronization signal blocks, wherein the synchronization signal burst is periodically received for a predetermined number of repetition times within a sample; means for configuring, for a first sample, each of the plurality of antenna panels to be switched in alternating manner to measure received signal power level of each of the plurality of synchronization signal blocks, wherein one antenna panel per a repetition time of the synchronization signal burst is configured to carry out the measuring; means for configuring, for a predetermined number of subsequent samples, each of the plurality of antenna panels to be switched in alternating manner to measure the received signal power level of the synchronization signal block providing a highest received signal power level for said antenna panel in the first sample, wherein each antenna panel is configured to carry out the measuring during a first repetition time of the synchronization signal burst within the sample; and means for sending a report of the measured received signal power level of said synchronization signal block to a network element.

## Description

### TECHNICAL FIELD

The present invention relates to beam scanning procedures.

### BACKGROUND

One of the new service categories introduced in 5G NR networks is ultra-reliable low-latency communication (URLLC). The two latest versions of the 5G standard, 3GPP Release 15 and 16, have built the physical implementation of URLLC to meet the two conflicting requirements of reliability and latency.

Especially when considering the operating of a user equipment (UE) in the Frequency Range 2 (FR2; 24.25 GHz to 52.6 GHz) including the mmWave range, the UE implementation is expected to have multiple antenna panels (Multi-Panel UE, MPUE) to perform beam steering over a large solid angle aiming to maximize the reliability. Depending on the configuration of the UE, the MPUE may be provided with multiple panels, but only one panel can be activated at a time, with panel switching/activation delay of few ms.

Such MPUE requires a long time to scan for other potential links since it must do the scan sequentially. The scan involves measuring the power levels of the received reference signals and averaging their values over a plurality of samples. Such long time for performing measurements and averaging for reporting might be very limiting upon aiming to minimize the time for uplink beam selection.

### SUMMARY

Now, an improved method and technical equipment implementing the method has been invented, by which the above problems are alleviated. Various aspects include a method, an apparatus and a non-transitory computer readable medium comprising a computer program, or a signal stored therein, which are characterized by what is stated in the independent claims. Various details of the embodiments are disclosed in the dependent claims and in the corresponding images and description.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is provided an apparatus comprising a plurality of antenna panels; means for receiving a synchronization signal burst comprising a plurality of synchronization signal blocks, wherein the synchronization signal burst is periodically received for a predetermined number of repetition times within a sample; means for configuring, for a first sample, each of the plurality of antenna panels to be switched in alternating manner to measure received signal power level of each of the plurality of synchronization signal blocks, wherein one antenna panel per a repetition time of the synchronization signal burst is configured to carry out the measuring; means for configuring, for a predetermined number of subsequent samples, each of the plurality of antenna panels to be switched in alternating manner to measure the received signal power level of the synchronization signal block providing a highest received signal power level for said antenna panel in the first sample, wherein each antenna panel is configured to carry out the measuring during a first repetition time of the synchronization signal burst within the sample; and means for sending a report of the measured received signal power level of said synchronization signal block to a network element.

According to an embodiment, the apparatus comprises means for determining the synchronization signal block per each antenna panel providing the highest received signal power level.

According to an embodiment, the apparatus comprises means for averaging, for each antenna panel, the received signal power level of the synchronization signal block determined to provide the highest received signal power level over all samples.

According to an embodiment, the apparatus comprises means for determining the predetermined number of subsequent samples based on one or more filtering parameters affecting on the averaging.

According to an embodiment, the apparatus comprises means for sending the report periodically to the network element, wherein the measurements for first sample and the subsequent samples are repeated for each report.

According to an embodiment, the apparatus comprises means for sending the report periodically to the network element, wherein the measurements for first sample are used for the first report and measurements for the subsequent samples are repeated for subsequent reports.

An apparatus according to a second aspect comprises: a plurality of antenna panels, at least one processor and at least one memory, said at least one memory stored with computer program code thereon, the at least one memory and the computer program code configured to, with the at least one processor, cause the apparatus at least to perform: receive a synchronization signal burst comprising a plurality of synchronization signal blocks, wherein the synchronization signal burst is periodically received for a predetermined number of repetition times within a sample; configure, for a first sample, each of the plurality of antenna panels to be switched in alternating manner to measure received signal power level of each of the plurality of synchronization signal blocks, wherein one antenna panel per a repetition time of the synchronization signal burst is configured to carry out the measuring; configure, for a predetermined number of subsequent samples, each of the plurality of antenna panels to be switched in alternating manner to measure the received signal power level of the synchronization signal block providing a highest received signal power level for said antenna panel in the first sample, wherein each antenna panel is configured to carry out the measuring during a first repetition time of the synchronization signal burst within the sample; and send a report of the measured received signal power level of said synchronization signal block to a network element.

A method according to a third aspect comprises receiving, by a user equipment comprising a plurality of antenna panels, a synchronization signal burst comprising a plurality of synchronization signal blocks, wherein the synchronization signal burst is periodically received for a predetermined number of repetition times within a sample; configuring, for a first sample, each of the plurality of antenna panels to be switched in alternating manner to measure received signal power level of each of the plurality of synchronization signal blocks, wherein one antenna panel per a repetition time of the synchronization signal burst is configured to carry out the measuring; configuring, for a predetermined number of subsequent samples, each of the plurality of antenna panels to be switched in alternating manner to measure the received signal power level of the synchronization signal block providing a highest received signal power level for said antenna panel, wherein each antenna panel is configured to carry out the measuring during a first repetition time of the synchronization signal burst within the sample; and sending a report of the measured received signal power level of said synchronization signal block to a network element.

Computer readable storage media according to further aspects comprise code for use by an apparatus, which when executed by a processor, causes the apparatus to perform the above methods.

### BRIEF DESCRIPTION OF THE DRAWINGS

For a more complete understanding of the example embodiments, reference is now made to the following descriptions taken in connection with the accompanying drawings in which:
Fig. 1 shows a schematic block diagram of an apparatus for incorporating a dual-SIM/MUSIM arrangement according to the embodiments;
Fig. 2 shows schematically a layout of an apparatus according to an example embodiment;
Fig. 3 shows a part of an exemplifying radio access network;
Fig. 4a an example of a UE with multiple antenna panels;
Figs. 4b and 4c show examples of the spherical coverage of a single panel UE and the spherical coverage of a 3-panel UE, respectively;
Fig. 5 shows a comparison of the achievable spherical coverage of a UE with one or three panels;
Fig. 6 shows an example of sequential beam scan procedure;
Fig. 7 shows an example of filtering operations for beam measurements in a UE;
Fig. 8 shows an example of beam scanning procedure;
Fig. 9 shows a flow chart for a beam scanning and mapping procedure according to an embodiment;
Fig. 10 shows an example of SSBs received by a UE from different angular directions;
Fig. 11 shows an example of measuring four different SSBs by four different antenna panels within one SS burst according to an embodiment;
Fig. 12 shows an example of beam scanning procedure according to an embodiment;
Fig. 13 shows a flow chart of beam scanning procedure according to various embodiments;
Figs. 14a - 14d illustrate a numerical example of a beam scanning procedure and the embodiments related thereto;
Figs. 15a and 15b show examples of beam scanning operations in case of periodical reporting according to various embodiments; and
Fig. 16 shows an example of beam measurements for a multi-TRP embodiment.

### DETAILED DESCRIPTON OF SOME EXAMPLE EMBODIMENTS

The following describes in further detail suitable apparatus and possible mechanisms carrying out the beam scanning and mapping operations. While the following focuses on 5G networks, the embodiments as described further below are by no means limited to be implemented in said networks only, but they are applicable in any network supporting beam scanning and mapping operations.

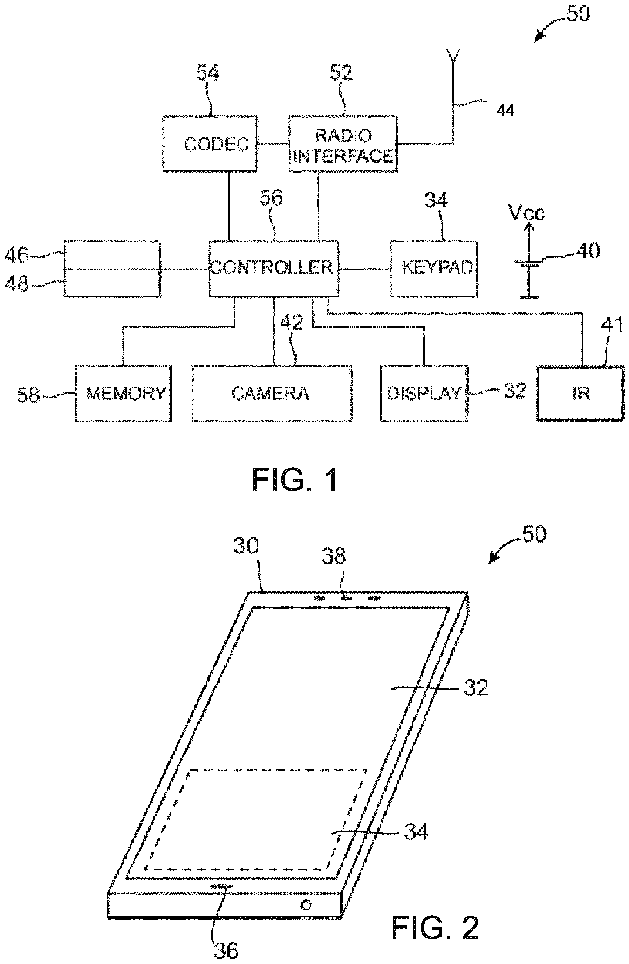

In this regard, reference is first made to Figures 1 and 2, where Figure 1 shows a schematic block diagram of an exemplary apparatus or electronic device 50, which may incorporate the arrangement according to the embodiments. Figure 2 shows a layout of an apparatus according to an example embodiment. The elements of Figs. 1 and 2 will be explained next.

The electronic device 50 may for example be a mobile terminal or user equipment of a wireless communication system. The apparatus 50 may comprise a housing 30 for incorporating and protecting the device. The apparatus 50 further may comprise a display 32 and a keypad 34. Instead of the keypad, the user interface may be implemented as a virtual keyboard or data entry system as part of a touch-sensitive display.

The apparatus may comprise a microphone 36 or any suitable audio input which may be a digital or analogue signal input. The apparatus 50 may further comprise an audio output device, such as anyone of: an earpiece 38, speaker, or an analogue audio or digital audio output connection. The apparatus 50 may also comprise a battery 40 (or the device may be powered by any suitable mobile energy device such as solar cell, fuel cell or clockwork generator). The apparatus may further comprise a camera 42 capable of recording or capturing images and/or video. The apparatus 50 may further comprise an infrared port 41 for short range line of sight communication to other devices. In other embodiments the apparatus 50 may further comprise any suitable short-range communication solution such as for example a Bluetooth wireless connection or a USB/firewire wired connection.

The apparatus 50 may comprise a controller 56 or processor for controlling the apparatus 50. The controller 56 may be connected to memory 58 which may store both user data and instructions for implementation on the controller 56. The memory may be random access memory (RAM) and/or read only memory (ROM). The memory may store computer-readable, computer-executable software including instructions that, when executed, cause the controller/processor to perform various functions described herein. In some cases, the software may not be directly executable by the processor but may cause a computer (e.g., when compiled and executed) to perform functions described herein. The controller 56 may further be connected to codec circuitry 54 suitable for carrying out coding and decoding of audio and/or video data or assisting in coding and decoding carried out by the controller.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

In the following, different exemplifying embodiments will be described using, as an example of an access architecture to which the embodiments may be applied, a radio access architecture based on Long Term Evolution Advanced (LTE Advanced, LTE-A) or new radio (NR, 5G), without restricting the embodiments to such an architecture, however. A person skilled in the art appreciates that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet protocol multimedia subsystems (IMS) or any combination thereof.

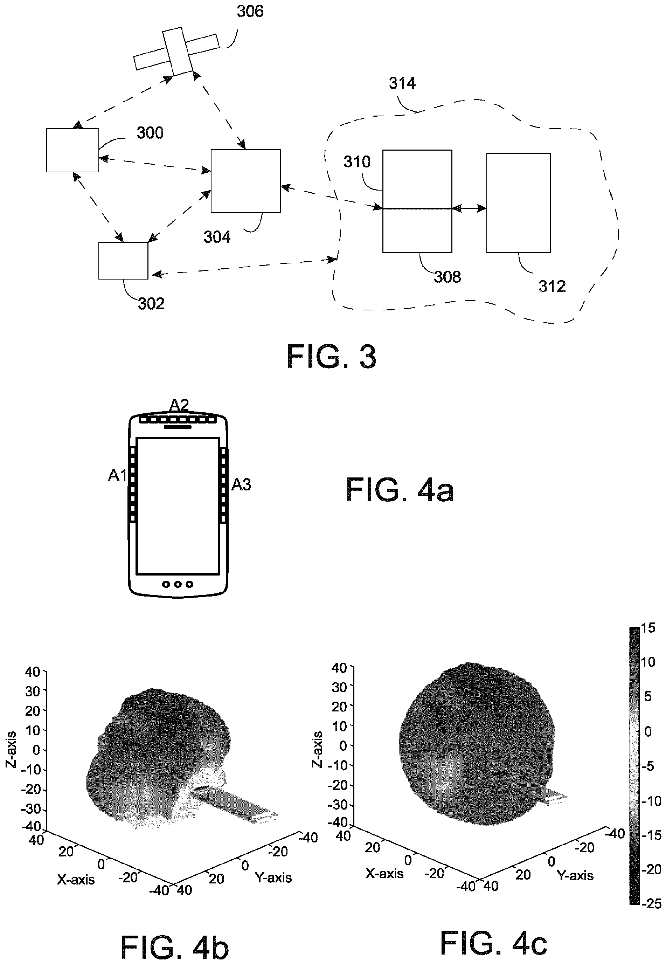

Figure 3 depicts examples of simplified system architectures only showing some elements and functional entities, all being logical units, whose implementation may differ from what is shown. The connections shown in Figure 3 are logical connections; the actual physical connections may be different. It is apparent to a person skilled in the art that the system typically comprises also other functions and structures than those shown in Figure 3. The embodiments are not, however, restricted to the system given as an example but a person skilled in the art may apply the solution to other communication systems provided with necessary properties.

The example of Figure 3 shows a part of an exemplifying radio access network.

Figure 3 shows user devices 300 and 302 configured to be in a wireless connection on one or more communication channels in a cell with an access node (such as (e/g)NodeB) 304 providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communication system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 310 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc. The CN may comprise network entities or nodes that may be referred to management entities. Examples of the network entities comprise at least an Access and Mobility Management Function (AMF).

The user device (also called a user equipment (UE), a user terminal, a terminal device, a wireless device, a mobile station (MS) etc.) illustrates one type of an apparatus to which resources on the air interface are allocated and assigned, and thus any feature described herein with a user device may be implemented with a corresponding network apparatus, such as a relay node, an eNB, and an gNB. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. Accordingly, the user device may be an IoT-device. The user device may also utilize cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. The access nodes of the radio network form transmission/reception (TX/Rx) points (TRPs), and the UEs are expected to access networks of at least partly overlapping multi-TRPs, such as macro-cells, small cells, pico-cells, femto-cells, remote radio heads, relay nodes, etc. The access nodes may be provided with Massive MIMO antennas, i.e. very large antenna array consisting of e.g. hundreds of antenna elements, implemented in a single antenna panel or in a plurality of antenna panels, capable of using a plurality of simultaneous radio beams for communication with the UE. The UEs may be provided with MIMO antennas having an antenna array consisting of e.g. dozens of antenna elements, implemented in a single antenna panel or in a plurality of antenna panels. Thus, the UE may access one TRP using one beam, one TRP using a plurality of beams, a plurality of TRPs using one (common) beam or a plurality of TRPs using a plurality of beams.

The 4G/LTE networks support some multi-TRP schemes, but in 5G NR the multi-TRP features are enhanced e.g. via transmission of multiple control signals via multi-TRPs, which enables to improve link diversity gain. Moreover, high carrier frequencies (e.g., mmWaves) together with the Massive MIMO antennas require new beam management procedures for multi-TRP technology.

5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also capable of being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

Frequency bands for 5G NR are separated into two frequency ranges: Frequency Range 1 (FR1) including sub-6 GHz frequency bands, i.e. bands traditionally used by previous standards, but also new bands extended to cover potential new spectrum offerings from 410 MHz to 7125 MHz, and Frequency Range 2 (FR2) including frequency bands from 24.25 GHz to 52.6 GHz. Thus, FR2 includes the bands in the mmWave range, which due to their shorter range and higher available bandwidth require somewhat different approach in radio resource management compared to bands in the FR1.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 312, or utilize services provided by them. The communication network may also be able to support the usage of cloud services, for example at least part of core network operations may be carried out as a cloud service (this is depicted in Fig. 3 by "cloud" 314). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU) and non-real time functions being carried out in a centralized manner (in a centralized unit, CU 308).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well. The gNB is a next generation Node B (or, new Node B) supporting the 5G network (i.e., the NR).

5G may also utilize non-terrestrial nodes 306, e.g. access nodes, to enhance or complement the coverage of 5G service, for example by providing backhauling, wireless access to wireless devices, service continuity for machine-to-machine (M2M) communication, service continuity for Internet of Things (IoT) devices, service continuity for passengers on board of vehicles, ensuring service availability for critical communications and/or ensuring service availability for future railway/maritime/aeronautical communications. The non-terrestrial nodes may have fixed positions with respect to the Earth surface or the non-terrestrial nodes may be mobile non-terrestrial nodes that may move with respect to the Earth surface. The non-terrestrial nodes may comprise satellites and/or HAPSs. Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node 304 or by a gNB located on-ground or in a satellite.

A person skilled in the art appreciates that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

The Radio Resource Control (RRC) protocol is used in various wireless communication systems for defining the air interface between the UE and a base station, such as eNB/gNB. This protocol is specified by 3GPP in in TS 36.331 for LTE and in TS 38.331 for 5G. In terms of the RRC, the UE may operate in LTE and in 5G in an idle mode or in a connected mode, wherein the radio resources available for the UE are dependent on the mode where the UE at present resides. In 5G, the UE may also operate in inactive mode. In the RRC idle mode, the UE has no connection for communication, but the UE is able to listen to page messages. In the RRC connected mode, the UE may operate in different states, such as CELL_DCH (Dedicated Channel), CELL_FACH (Forward Access Channel), CELL_PCH (Cell Paging Channel) and URA_PCH (URA Paging Channel). The UE may communicate with the eNB/gNB via various logical channels like Broadcast Control Channel (BCCH), Paging Control Channel (PCCH), Common Control Channel (CCCH), Dedicated Control Channel (DCCH), Dedicated Traffic Channel (DTCH).

The transitions between the states is controlled by a state machine of the RRC. When the UE is powered up, it is in a disconnected mode/idle mode. The UE may transit to RRC connected mode with an initial attach or with a connection establishment. If there is no activity from the UE for a short time, eNB/gNB may suspend its session by moving to RRC Inactive and can resume its session by moving to RRC connected mode. The UE can move to the RRC idle mode from the RRC connected mode or from the RRC inactive mode.

The actual user and control data from network to the UEs is transmitted via downlink physical channels, which in 5G include Physical downlink control channel (PDCCH) which carries the necessary downlink control information (DCI), Physical Downlink Shared Channel (PDSCH), which carries the user data and system information for user, and Physical broadcast channel (PBCH), which carries the necessary system information to enable a UE to access the 5G network.

The user and control data from UE to the network is transmitted via uplink physical channels, which in 5G include Physical Uplink Control Channel (PUCCH), which is used for uplink control information including HARQ feedback acknowledgments, scheduling request, and downlink channel-state information for link adaptation, Physical Uplink Shared Channel (PUSCH), which is used for uplink data transmission, and Physical Random Access Channel (PRACH), which is used by the UE to request connection setup referred to as random access.

For the 5G technology, one of the most important design goals has been improved metrics of reliability and latency, in addition to network resilience and flexibility.

Especially when considering the operating of the UE in the Frequency Range 2 (FR2; 24.25 GHz to 52.6 GHz) including the mmWave range, the UE implementation is expected to have multiple antenna panels (Multi-Panel UE, MPUE) to perform beam steering over a large solid angle aiming to maximize the reliability. Figure 4a shows an example of a UE with multiple panels A1, A2, A3, each panel consisting of an antenna array comprising a plurality of antenna elements, such as an array of 1x8 antenna elements. Figures 4b and 4c, in turn, show a comparison of the spherical coverage of a single panel UE and the spherical coverage of a 3-panel UE, respectively. Based on Figures 4b and 4c, it is obvious that multi-panel operation is required to optimize the spherical coverage of a UE at mmWave frequencies. A single panel UE can only transmit/receive from a limited number of angles.

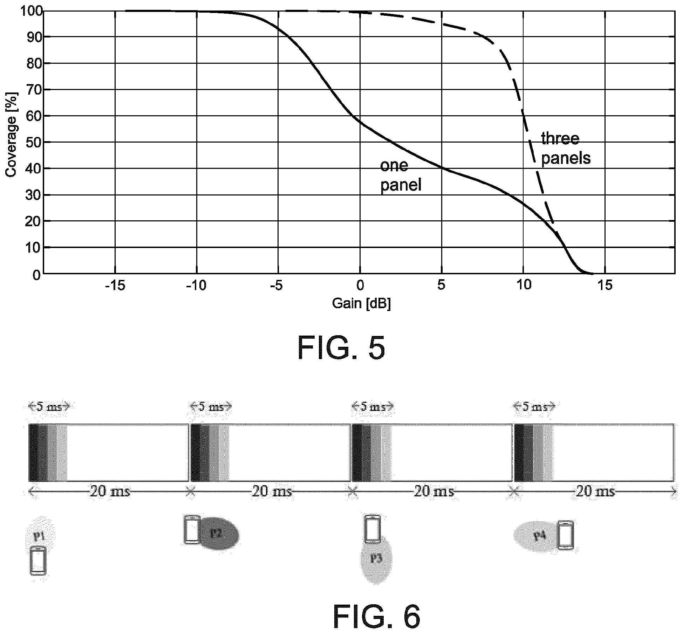

This is further confirmed by Figure 5, which plots a comparison of the achievable spherical coverage of a UE with one or three panels (each of them being 8x1 patch arrays). As shown in Figure 5, with a single array (only the front panel) on the UE, only 25 % of the sphere is covered with 10 dB, whereas with 3 arrays (all three panels) on the UE, about 60 % of the directions can be reached with a 10 dB gain.

The MPUE may exhibit different implementations regarding its capabilities for simultaneous transmission/reception:
- MPUE-Assumption1: Multiple panels are implemented on a UE and only one panel can be activated at a time, with panel switching/activation delay of few ms;
- MPUE-Assumption2: Multiple panels are implemented on a UE and multiple panels can be activated at a time and one or more panels can be used for Tx;
- MPUE-Assumption3: Multiple panels are implemented on a UE and multiple panels can be activated at a time but only one panel can be used for Tx.

An MPUE implemented with assumption 1 (i.e. only one panel active at the time) requires a long time to scan for other potential links since it must do the scan sequentially. The SS burst is typically repeated with a periodicity of 20 ms and lasts 5 ms. It may contain up to 64 SSB of 4 symbols each. The sequential UE scan is illustrated in Figure 6, where a MPUE comprising four panels P1, P2, P3, P4 activates one of the panels in alternating manner for carrying a scanning of a SS burst with the periodicity of 20 ms.

It is noted that the arrangement of Figure 6 may be also valid for MPUEs implemented with assumption 3 (i.e. multiple panels active at the same time) depending on the number of Rx chains on the device vs. the number of panels.

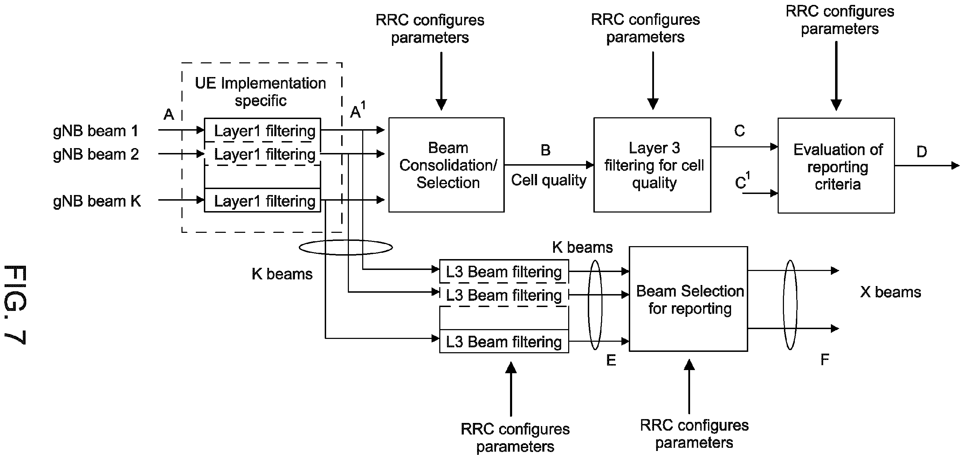

Moreover, the UE must average the received power level over a configured number of samples, typically between 3 and 5 samples. Layer 1 filtering introduces a certain level of measurement averaging. Layer 3 filtering for cell quality and related parameters used are specified in TS 38.331. The actual implementation about how and when the UE exactly performs the required measurements may vary among the UEs. Measured values filtering at the UE is illustrated in Figure 7.

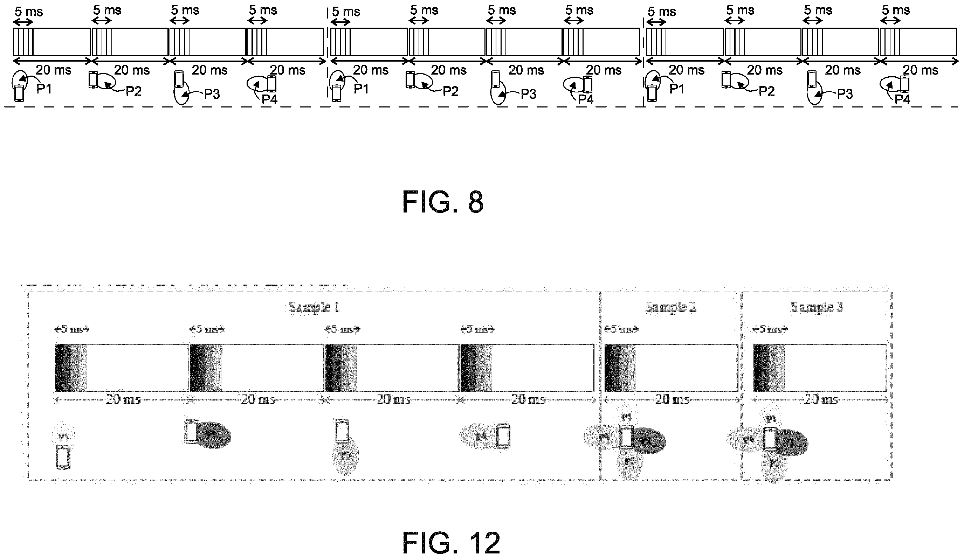

Figure 8, in turn, illustrates an example of MPUE-Assumption1 measuring alternative SSBs and carrying out the received power level averaging over 3 values before reporting to network. In order to provide a meaningful value to the network on alternative SSB links, the UE requires 240 ms for the averaging of three samples. If the configured number of samples for the averaging were five samples, the UE would require 400 ms. Such long time for performing measurements and averaging for reporting might be very limiting upon aiming to minimize the time for uplink beam selection.

Moreover, it becomes obvious that such long reporting timing is not acceptable when comparing it with channel coherence time in scenarios where UE speed is included. Namely, even for pedestrian speed, the scanning time required for an MPUE with assumption 1 would make the measurement unreliable. For example, a speed of 3.75 km/h would result in the channel coherence time of about 189 ms and a speed of 7.5 km/h would result in the channel coherence time of about 94 ms. It can be easily seen that MPUE scanning and measurement time of 240 ms or 400 ms lead to unreliable reports.

In the following, an enhanced method for beam scanning will be described in more detail, in accordance with various embodiments.

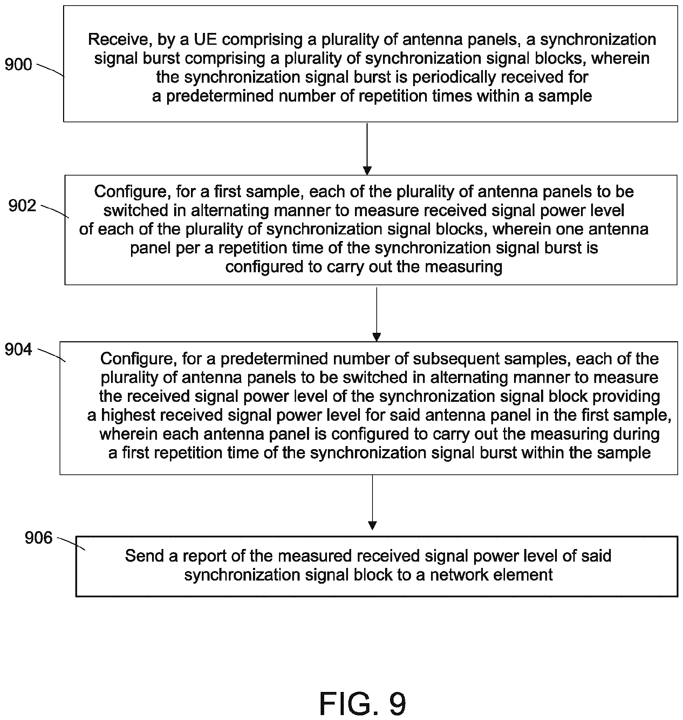

The method, which is disclosed in flow chart of Figure 9 as reflecting the operation of a terminal apparatus, such as a user equipment (UE), wherein the method comprises receiving (900), by a user equipment comprising a plurality of antenna panels, a synchronization signal burst comprising a plurality of synchronization signal blocks, wherein the synchronization signal burst is periodically received for a predetermined number of repetition times within a sample; configuring (902), for a first sample, each of the plurality of antenna panels to be switched in alternating manner to measure received signal power level of each of the plurality of synchronization signal blocks, wherein one antenna panel per a repetition time of the synchronization signal burst is configured to carry out the measuring; configuring (904), for a predetermined number of subsequent samples, each of the plurality of antenna panels to be switched in alternating manner to measure the received signal power level of the synchronization signal block providing a highest received signal power level for said antenna panel in the first sample, wherein each antenna panel is configured to carry out the measuring during a first repetition time of the synchronization signal burst within the sample; and sending (906) a report of the measured received signal power level of said synchronization signal block to a network element.

Thus, the method enables to shorten the time needed for obtaining the averaged received signal power level for each antenna panel, thereby significantly speeding up the beam acquisition and reporting procedure. The first sample is processed in a conventional manner, i.e. only one antenna panel of the UE per a repetition time of the synchronization signal burst measures the received signal power level of each of the plurality of synchronization signal blocks (SSB), and the next antenna panel is switched to carry out the measurements in the next repetition time of the synchronization signal burst within the first sample. Now, in the subsequent samples, the received signal power level of only the SSB providing the highest received signal power level in the first sample per antenna panel is measured. This enables to switch each of the antenna panels to carry out the measurements within one synchronization signal burst, thereby significantly .

According to an embodiment, the method comprises determining the synchronization signal block per each antenna panel providing the highest received signal power level.

Hence, upon listening to all synchronization signal blocks of the entire burst sequentially on each panel, the UE switches the panels only once per synchronization signal burst. The UE stores the measured RSRP values for each SSB per panel. For each panel, the UE may determine, for example, the index of the SSB received with the highest power level. The SSB index may be stored for the subsequent beam scan procedure. It is noted that this is only performed for the first sample of the scanning procedure.

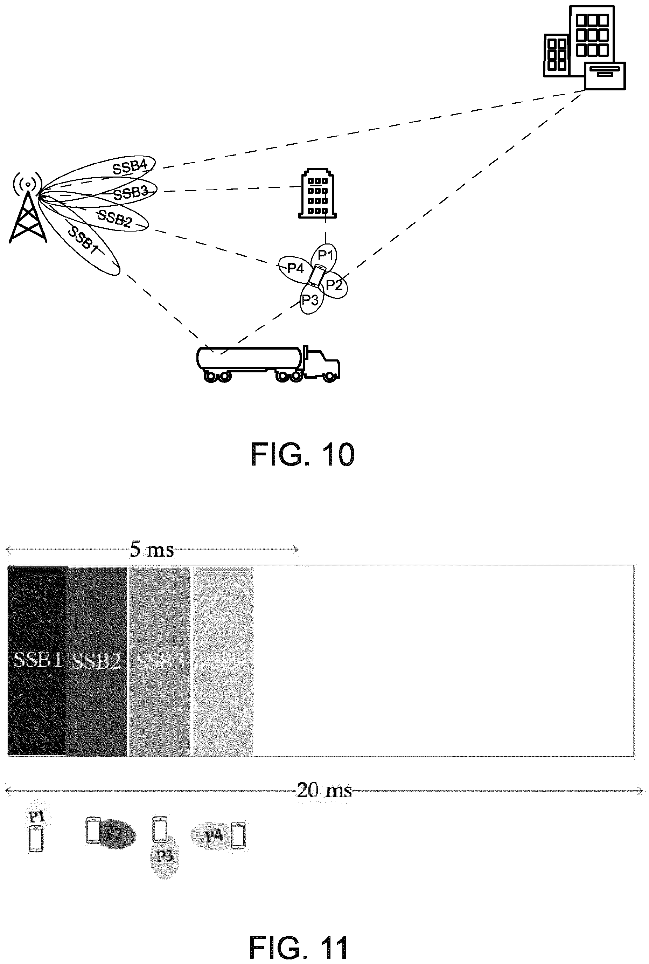

Hence, the idea is to receive and measure a SSB with only the most relevant antenna panel in the samples following the first sample. In order to learn the current angular directions of the individual SSBs so as to map each SSB to a specific panel, the UE uses the measurements of the first sample, especially the SSB providing the highest received signal power for each panel. This principle is illustrated in the example of Figure 10 showing that SSB1 is coming from a reflection with maximum power received by panel P3 of the UE. Hence, it will be received with little or even no power at all on the other antenna panels of the UE. Similarly, SSB2 will be received with highest power on panel P4 of the UE, thereby it is not useful to measure it on other UE panels. The same principle applies to SSB3 reflected onto panel P1 and SSB 4 arriving from a reflection onto panel P2 of the UE with maximum power.

It is, nevertheless, noted that Figure 10 shows a simplified example for illustration purposes only. In practice, a SS burst may contain up to 64 SSBs and the channel and multipath environment might be very rich and complex.

The most time savings are achieved by mapping the SSB to the panels receiving them with highest power and thereby only measuring each SSB on the relevant panel within the same SS burst. This illustrated in Figure 11 showing how four different SSBs can be measured by four different antenna panels within a SS burst duration of 5 ms. It is noted that the UE switching beams during the SS burst is not a problem, since the SSBs are not necessarily on consecutive symbols. Furthermore, even if the SSBs were on consecutive symbols, the UE beam switch time is similar to the gNB beam switch time (which is also switching beams on consecutive symbols) and is of the order of nano seconds. In FR2 120 KHz SCS, the cyclic prefix length is 570 ns, whereby the UE has plenty of time to switch beam between two consecutive symbols.

According to an embodiment, the method comprises averaging, for each antenna panel, the received signal power level of the synchronization signal block determined to provide the highest received signal power level over all samples.

It is noted that herein the term "averaging" refers to determining, e.g. calculating, an average value for a parameter from a group of parameter values. It is noted that the average value may refer to any value considered to represent a central tendency of said group of parameter values, such as an arithmetical mean, median or mode of the group of parameter values.

For each antenna panel, the UE obtains values for received signal power levels of the synchronization signal block determined in the first sample for a predetermined number of subsequent samples. When a sufficient number of samples has been scanned, the UE determines an average value of the RSRP values of the only one SSB per panel.

According to an embodiment, the method comprises determining the predetermined number of subsequent samples based on one or more filtering parameters affecting on the averaging. Thus, the Layer 1 and/or Layer 3 filtering processes, which may be UE model-specific, at least partly determine how many samples per antenna panel are required to obtain reliably averaged measurement results. Based on this, the total number of samples may be 3 to 5 or even more.

Figure 12 shows an example where the UE uses the first sample to learn and map the SSBs to one of the antenna panels of the UE (i.e. the antenna panel receiving the SSB on the best quality) and for the next two samples, the UE uses the 'panel switch within the SS burst' procedure, as described above. Herein, the predetermined number of subsequent samples is two, resulting in total of three samples used for the averaging.

Thus, the method leads to a significant scan time reduction for MPUE with assumption 1: when using three samples averaging, from 240 ms (prior known method shown Figure 8) to 120 ms, i.e. 50% time reduction. When using five samples averaging, even more significant proportional time reduction of 60 % (from 400 ms to 160 ms) is achieved.

Moreover, in addition to considerably speeding up the beam acquisition, the method also enables to bring the UE scan and reporting time below the channel coherence time for pedestrian speeds of 3 km/h, thereby making the UE reports reliable and meaningful.

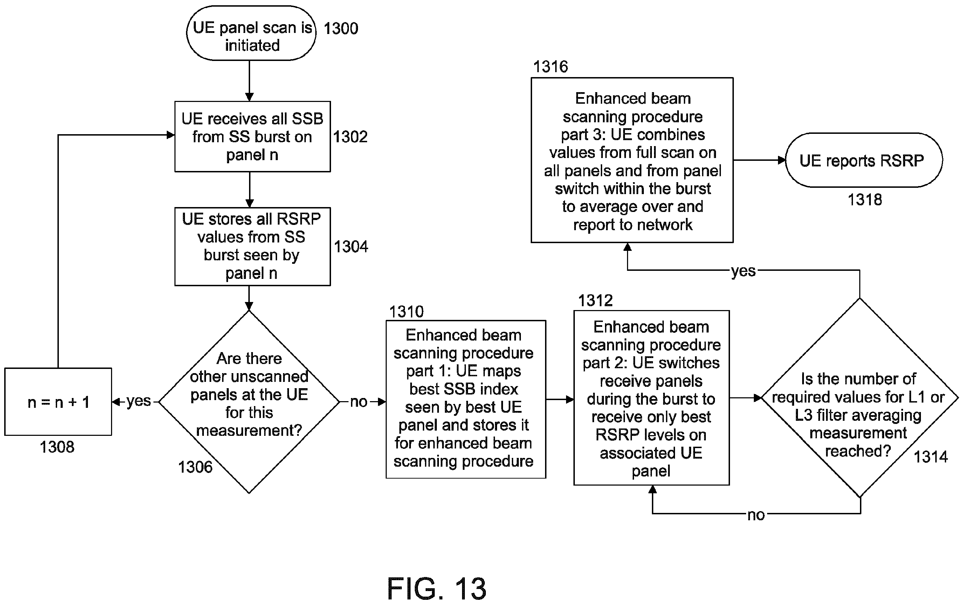

The method and at least some of the embodiments is illustrated in the flow chart of Figure 13. The method for enhanced beam scanning procedure in a UE starts by the UE initiating (1300) the panel scanning. The scanning is started with the UE receiving (1302) all SSBs from a SS burst (i.e. the entire burst) using a first panel P1, and the UE stores (1304) the reference signal receiver power (RSRP) level values as measured by the first panel P1 from the SS burst. During the first sample, all other panels P2, P3, ... of the UE will undergo (1306, 1308) the same procedure: within the next repetition period of 20 ms the next panel is activated to receive all SSBs from the SS burst and store the RSRP level values until all panels have carried out the above procedure.

For each panel, the UE determines (1310) the index of the SSB received with the highest power level and stores the SSB index for the subsequent beam scan procedure. It is noted that this is only performed for the first sample of the scanning procedure. For the subsequent samples, the UE activates (1312) each panel to receive only the SSB, which it received with the highest power level during the first sample, and the UE stores the RSRP level only for the same SSB index in the current sample. Thus, for each sample following the first sample, only one SSB per panel is received and its power value is stored.

The number of samples to be processed depends on the configuration for the UE measurement averaging. Typically, 3 - 5 samples are required to obtain reliably averaged values. Thus, the UE checks (1314) if a sufficient number of samples have been scanned, and if not, the next sample is subjected to the step (1312), where only one SSB per panel is received, according to the SSB index determined in the first sample, and its power value is stored. When the sufficient number of samples have been scanned, the UE averages (1316) the RSRP values of the only one SSB per panel for the L1 and/or L3 filtering. The UE then reports (1318) the averaged values to the gNB.

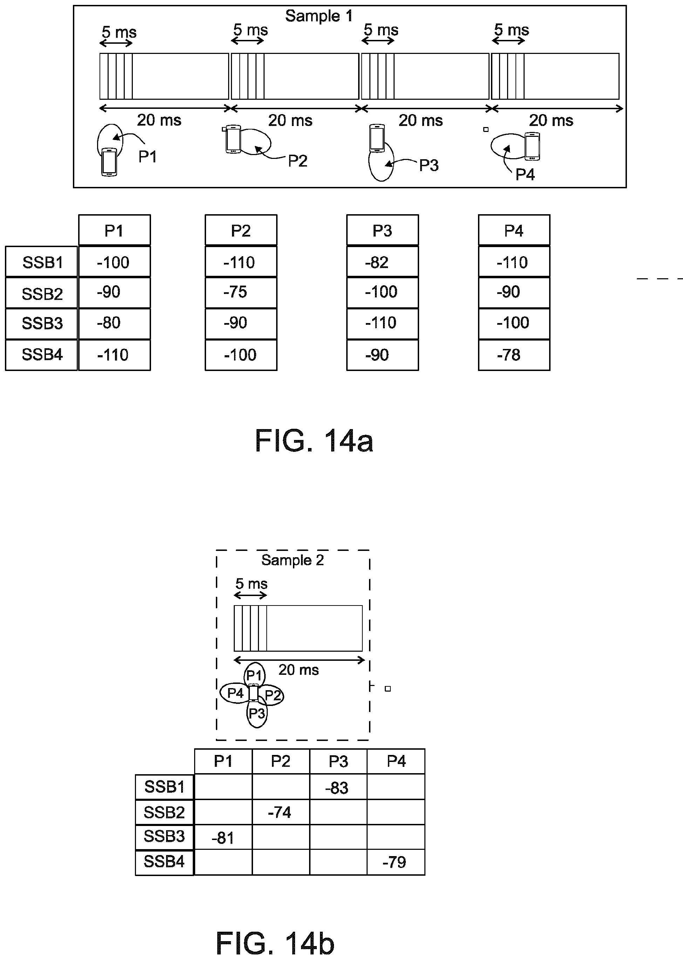

The enhanced beam scanning procedure and the embodiments related thereto are further illustrated by the following numerical example depicted in Figures 14a - 14d. The numerical example given below shows the UE averaging over 3 samples and receiving only 4 SSBs in the SS burst. It is noted that this is a simplistic example for illustration purposes; in reality, there may be up to 64 SSBs in the SS burst and the averaging may be over 5 samples or more. The gain of the described procedure will increase accordingly to larger number of samples but will be independent of the number on SSBs in the SS burst.

In the first sample shown in Figure 14a, the UE listens to all SSBs of the entire burst on each panel P1 - P4 sequentially and only switches the panels once per SS burst. The UE stores the measured RSRP values for each SSB per panel. The UE then determines the SSB index for the highest RSRP value for each panel, as shown in the table of values: i.e. SSB3 for panel P1, SSB2 for panel P2, SSB1 for panel P3 and SSB4 for panel P4.

In the following samples (i.e. samples 2 and 3 in this example), the UE uses the above mapping of SSB index per panel to only listen to the SSB with the panel receiving the particular SSB with the highest power. Accordingly, the UE switches the receiving panel for each SSB within the SS burst, and therefore obtains the RSRP values for the SSB per panel within approximately 5 ms.

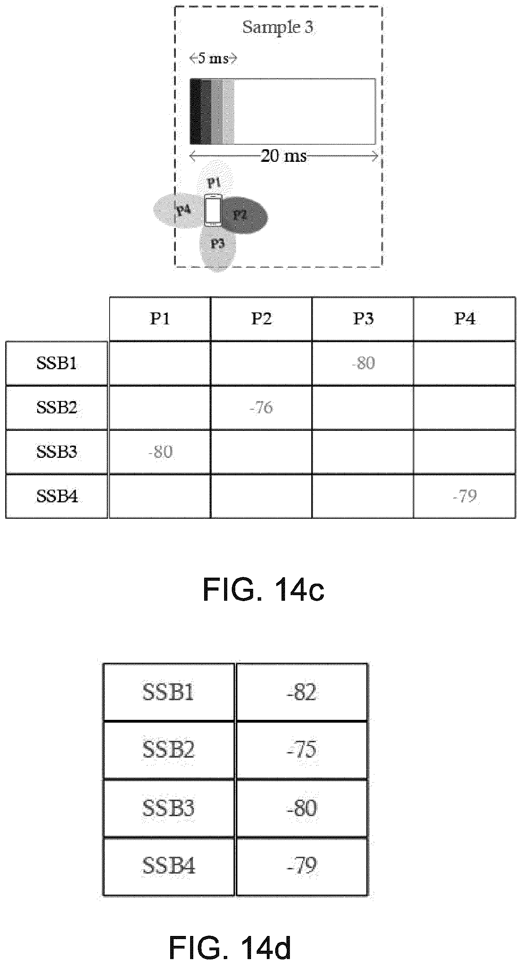

As seen in Figures 14b and 14c, the UE only measures SSB3 on P1, SSB2 on P2, SSB1 on P3 and SSB4 on P4. Because a particular SSB is measured only with one panel (e.g. SSB3 does not need to be measured on panels P2, P3 or P4), the UE can better utilize the SS burst and acquire quicker the relevant measurements. While it may look like the UE is receiving from all panels simultaneously during a single burst period, in practice the UE switches the panels sequentially on an SSB basis within the burst. The time spent for obtaining the measurement results is approximately 120 ms (80 ms for the first sample and 20 ms per sample for the subsequent two sample).

The UE then averages over all three samples the measured RSRP values per SSB per panel and reports them to the network. The averaged values of SSB1 - SSB4 are shown in Figure 14d.

In the example of Figures 14a - 14d, the gain in time is 50% compared to the known solution, where the scanning time for each of three samples would take 80 ms, resulting in total of 240 ms. It is noted that for a 5-samples averaging, the gain in time would be 60%, and the gain increases further with the growing number of samples to be averaged.

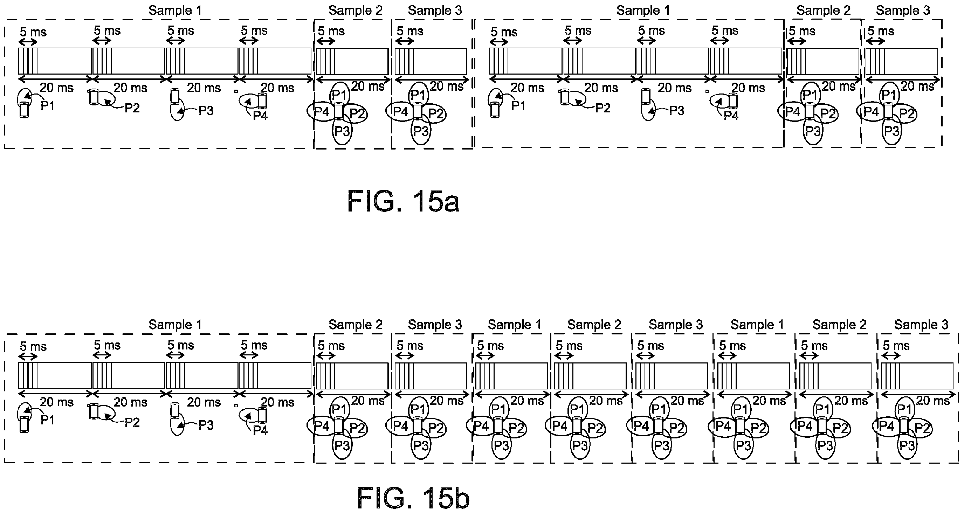

According to an embodiment, the method comprises sending the report periodically to the network element, wherein the measurements for first sample and the subsequent samples are repeated for each report. The UE reports the measurements periodically to the network and it may use e.g. running averages in reporting. In such cases, the enhanced scan procedure may be repeated unchanged, as shown in Figure 15a.

It is noted that the term "periodically" as used herein e.g. in connection with the UE sending reports or the UE receiving SS bursts, refers to actions or events taking place repeatedly either at regular time intervals or at time to time (i.e. at unregular intervals). The regular intervals may be predetermined, e.g. static or varying according to a certain pattern. The unregular intervals may be dependent on, and thereby triggered by, another action or event.

According to an embodiment, the method comprises sending the report periodically to the network element, wherein the measurements for first sample are used for the first report and measurements for the subsequent samples are repeated for subsequent reports. For example, in a static environment the UE may skip the repetition of the first procedure (all SSBs for each panel) to further speed up the overall procedure, and a running average may be calculated as the measuring continues with a plurality of subsequent samples. This is shown in Figure 15b.

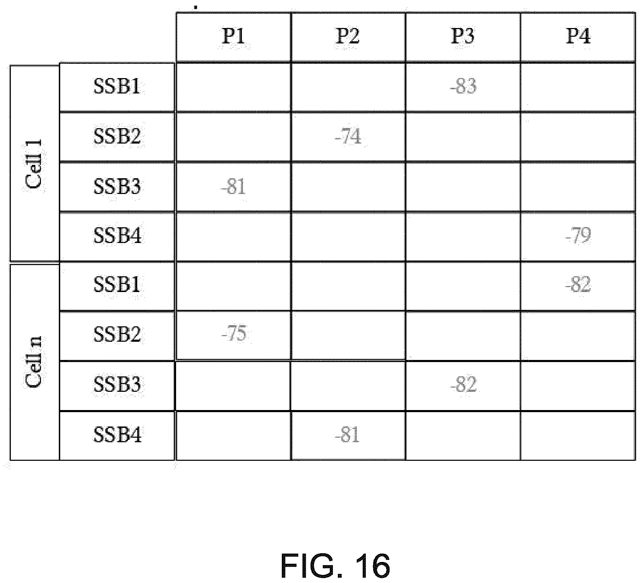

It is noted that while the above description has mainly focused on single-TRP behaviour, the same principle is equally applicable to multi-TRP scenarios. In such case, it may to higher complexity in the mapping step performed by the UE in step 1 the first procedure (all SSBs for each panel), as shown in the example of Figure 16.

An apparatus, such as a UE, according to an aspect comprises a plurality of antenna panels; means for receiving a synchronization signal burst comprising a plurality of synchronization signal blocks, wherein the synchronization signal burst is periodically received for a predetermined number of repetition times within a sample; means for configuring, for a first sample, each of the plurality of antenna panels to be switched in alternating manner to measure received signal power level of each of the plurality of synchronization signal blocks, wherein one antenna panel per a repetition time of the synchronization signal burst is configured to carry out the measuring; means for configuring, for a predetermined number of subsequent samples, each of the plurality of antenna panels to be switched in alternating manner to measure the received signal power level of the synchronization signal block providing a highest received signal power level for said antenna panel in the first sample, wherein each antenna panel is configured to carry out the measuring during a first repetition time of the synchronization signal burst within the sample; and means for sending a report of the measured received signal power level of said synchronization signal block to a network element.

According to an embodiment, the apparatus may comprise means for determining the synchronization signal block per each antenna panel providing the highest received signal power level.

According to an embodiment, the apparatus may comprise means for averaging, for each antenna panel, the received signal power level of the synchronization signal block determined to provide the highest received signal power level over all samples.

According to an embodiment, the apparatus may comprise means for determining the predetermined number of subsequent samples based on one or more filtering parameters affecting on the averaging.

According to an embodiment, the apparatus may comprise means for sending the report periodically to the network element, wherein the measurements for first sample and the subsequent samples are repeated for each report.

According to an embodiment, the apparatus may comprise means for sending the report periodically to the network element, wherein the measurements for first sample are used for the first report and measurements for the subsequent samples are repeated for subsequent reports.

An apparatus according to a further aspect comprises a plurality of antenna panels, at least one processor and at least one memory, said at least one memory stored with computer program code thereon, the at least one memory and the computer program code configured to, with the at least one processor, cause the apparatus at least to perform: receive a synchronization signal burst comprising a plurality of synchronization signal blocks, wherein the synchronization signal burst is periodically received for a predetermined number of repetition times within a sample; configure, for a first sample, each of the plurality of antenna panels to be switched in alternating manner to measure received signal power level of each of the plurality of synchronization signal blocks, wherein one antenna panel per a repetition time of the synchronization signal burst is configured to carry out the measuring; configure, for a predetermined number of subsequent samples, each of the plurality of antenna panels to be switched in alternating manner to measure the received signal power level of the synchronization signal block providing a highest received signal power level for said antenna panel in the first sample, wherein each antenna panel is configured to carry out the measuring during a first repetition time of the synchronization signal burst within the sample; and send a report of the measured received signal power level of said synchronization signal block to a network element.

Such apparatuses may comprise e.g. the functional units disclosed in any of the Figures 1- 3 and 4a for implementing the embodiments.

A further aspect relates to a computer program product, stored on a non-transitory memory medium, comprising computer program code, which when executed by at least one processor, causes an apparatus at least to perform: receive a synchronization signal burst comprising a plurality of synchronization signal blocks, wherein the synchronization signal burst is periodically received for a predetermined number of repetition times within a sample; configure, for a first sample, each of the plurality of antenna panels to be switched in alternating manner to measure received signal power level of each of the plurality of synchronization signal blocks, wherein one antenna panel per a repetition time of the synchronization signal burst is configured to carry out the measuring; configure, for a predetermined number of subsequent samples, each of the plurality of antenna panels to be switched in alternating manner to measure the received signal power level of the synchronization signal block providing a highest received signal power level for said antenna panel in the first sample, wherein each antenna panel is configured to carry out the measuring during a first repetition time of the synchronization signal burst within the sample; and send a report of the measured received signal power level of said synchronization signal block to a network element.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended examples. However, all such and similar modifications of the teachings of this invention will still fall within the scope of this invention.

## Claims

1. An apparatus comprising:
a plurality of antenna panels;
means for receiving a synchronization signal burst comprising a plurality of synchronization signal blocks, wherein the synchronization signal burst is periodically received for a predetermined number of repetition times within a sample;
means for configuring, for a first sample, each of the plurality of antenna panels to be switched in alternating manner to measure received signal power level of each of the plurality of synchronization signal blocks, wherein one antenna panel per a repetition time of the synchronization signal burst is configured to carry out the measuring;
means for configuring, for a predetermined number of subsequent samples, each of the plurality of antenna panels to be switched in alternating manner to measure the received signal power level of the synchronization signal block providing a highest received signal power level for said antenna panel in the first sample, wherein each antenna panel is configured to carry out the measuring during a first repetition time of the synchronization signal burst within the sample; and
means for sending a report of the measured received signal power level of said synchronization signal block to a network element.

2. The apparatus according to claim 1, comprising
means for determining the synchronization signal block per each antenna panel providing the highest received signal power level.

3. The apparatus according to claim 1 or 2, comprising
means for averaging, for each antenna panel, the received signal power level of the synchronization signal block determined to provide the highest received signal power level over all samples.

4. The apparatus according to any preceding claim, comprising
means for determining the predetermined number of subsequent samples based on one or more filtering parameters affecting on the averaging.

5. The apparatus according to any preceding claim, comprising
means for sending the report periodically to the network element, wherein the measurements for first sample and the subsequent samples are repeated for each report.

6. The apparatus according to any preceding claim, comprising
means for sending the report periodically to the network element, wherein the measurements for first sample are used for the first report and measurements for the subsequent samples are repeated for subsequent reports.

7. An apparatus comprising: a plurality of antenna panels, at least one processor and at least one memory, said at least one memory stored with computer program code thereon, the at least one memory and the computer program code configured to, with the at least one processor, cause the apparatus at least to perform:
receive a synchronization signal burst comprising a plurality of synchronization signal blocks, wherein the synchronization signal burst is periodically received for a predetermined number of repetition times within a sample;
configure, for a first sample, each of the plurality of antenna panels to be switched in alternating manner to measure received signal power level of each of the plurality of synchronization signal blocks, wherein one antenna panel per a repetition time of the synchronization signal burst is configured to carry out the measuring;
configure, for a predetermined number of subsequent samples, each of the plurality of antenna panels to be switched in alternating manner to measure the received signal power level of the synchronization signal block providing a highest received signal power level for said antenna panel in the first sample, wherein each antenna panel is configured to carry out the measuring during a first repetition time of the synchronization signal burst within the sample; and
send a report of the measured received signal power level of said synchronization signal block to a network element.

8. The apparatus according to claim 7, comprising computer program code configured to, with the at least one processor, cause the apparatus to perform:
determine the synchronization signal block per each antenna panel providing a highest received signal power level.

9. The apparatus according to claim 7 or 8, comprising computer program code configured to, with the at least one processor, cause the apparatus to perform:
average, for each antenna panel, the received signal power level of the synchronization signal block determined to provide the highest received signal power level over all samples.

10. The apparatus according to any of claims 7 - 9, comprising computer program code configured to, with the at least one processor, cause the apparatus to perform:
determine the predetermined number of subsequent samples based on one or more filtering parameters affecting on the averaging.

11. The apparatus according to any of claims 7 - 10, comprising computer program code configured to, with the at least one processor, cause the apparatus to perform:
send the report periodically to the network element, wherein the measurements for first sample and the subsequent samples are repeated for each report.

12. The apparatus according to any of claims 7 - 11, comprising computer program code configured to, with the at least one processor, cause the apparatus to perform:
send the report periodically to the network element, wherein the measurements for first sample are used for the first report and measurements for the subsequent samples are repeated for subsequent reports.

13. A method comprising:
receiving, by a user equipment comprising a plurality of antenna panels, a synchronization signal burst comprising a plurality of synchronization signal blocks, wherein the synchronization signal burst is periodically received for a predetermined number of repetition times within a sample;
configuring, for a first sample, each of the plurality of antenna panels to be switched in alternating manner to measure received signal power level of each of the plurality of synchronization signal blocks, wherein one antenna panel per a repetition time of the synchronization signal burst is configured to carry out the measuring;
configuring, for a predetermined number of subsequent samples, each of the plurality of antenna panels to be switched in alternating manner to measure the received signal power level of the synchronization signal block providing a highest received signal power level for said antenna panel in the first sample, wherein each antenna panel is configured to carry out the measuring during a first repetition time of the synchronization signal burst within the sample; and
sending a report of the measured received signal power level of said synchronization signal block to a network element.

14. The method according to claim 13, comprising
determining the synchronization signal block per each antenna panel providing a highest received signal power level.

15. The method according to claim 13 or 14, comprising
averaging, for each antenna panel, the received signal power level of the synchronization signal block determined to provide the highest received signal power level over all samples.

16. The method according to any of claims 13 - 15, comprising
determining the predetermined number of subsequent samples based on one or more filtering parameters affecting on the averaging.

17. The method according to any of claims 13 - 16, comprising
sending the report periodically to the network element, wherein the measurements for first sample and the subsequent samples are repeated for each report.

18. The method according to any of claims 13 - 16, comprising
sending the report periodically to the network element, wherein the measurements for first sample are used for the first report and measurements for the subsequent samples are repeated for subsequent reports.

19. A computer program comprising instructions stored thereon for performing, when executed by a processor of an apparatus, at least the following:
receiving, the apparatus comprising a plurality of antenna panels, a synchronization signal burst comprising a plurality of synchronization signal blocks, wherein the synchronization signal burst is periodically received for a predetermined number of repetition times within a sample;
configuring, for a first sample, each of the plurality of antenna panels to be switched in alternating manner to measure received signal power level of each of the plurality of synchronization signal blocks, wherein one antenna panel per a repetition time of the synchronization signal burst is configured to carry out the measuring;
configuring, for a predetermined number of subsequent samples, each of the plurality of antenna panels to be switched in alternating manner to measure the received signal power level of the synchronization signal block providing a highest received signal power level for said antenna panel in the first sample, wherein each antenna panel is configured to carry out the measuring during a first repetition time of the synchronization signal burst within the sample; and
sending a report of the measured received signal power level of said synchronization signal block to a network element.
